# EUROPEAN PATENT APPLICATION

(11) **EP 3 826 363 A1**
(43) Date of publication of application: **26.05.2021**
(21) Application number: 19837757.4
(22) Date of filing: 19.07.2019
(51) Int. Cl.: H04W 40/02

(54) **PATH SELECTING METHOD, TERMINAL DEVICE, AND NETWORK DEVICE**

(30) Priority: 19.07.2018 CN 201810798885
(71) Applicant: GUANGDONG OPPO MOBILE TELECOMMUNICATIONS CORP., LTD., Dongguan Guangdong 523860 (CN)
(72) Inventor: LU, Qianxi, Dongguan, Guangdong 523860 (CN); LIN, Huei-Ming, South Yarra, Victoria 3141 (AU)
(74) Representative: Novagraaf Technologies
(86) International application number: PCT/CN2019/096722
(87) International publication number: WO 2020/015727

(57) **Abstract**

Disclosed are a path selecting method, a terminal device, and a network device. The method comprises: the terminal device receives first indication information sent by the network device, the first indication information being used for indicating a transmission path of a specific service, and the transmission path being a honeycomb path or a side path; the terminal device transmits the specific service on the transmission path indicated by the first indication information. The method facilitates improving the communication performance.

## Description

This application is based upon and claims priority to Chinese Patent Application No. 201810798885.2, filed on July 19, 2018, titled "Method for selecting path, terminal device and network device", the entire contents thereof are incorporated herein by reference.

### TECHNICAL FIELD

The embodiments of the present application relate to the field of communication technologies, and in particular, relate to a method for selecting a path, a terminal device, and a network device.

### BACKGROUND

The Internet of Vehicles system is a kind of Sidelink (SL) transmission technology based on Long Term Evolution-Device to Device (LTE-D2D). Different from the manner for receiving or sending communication data through a base station in the traditional LTE system, the Internet of Vehicles system adopts device to device direct communication, so it has higher spectrum efficiency and lower transmission delay. Therefore, in the Internet of Vehicles system, there are two transmission paths: 1. the transmission path received or sent by the base station; 2. the device to device direct (D2D) communication path. How the terminal device transmits services on these two paths is a problem to be solved.

### SUMMARY

The embodiments of the present application provide a method for selecting a path, a terminal device, and a network device, which are beneficial for improving communication performance.

In a first aspect, there is provided a method for selecting a path, including: receiving, by a terminal device, first indication information sent by a network device, where the first indication information is configured to indicate a transmission path of a specific service, and the transmission path is a cellular path or a side path; and transmitting, by the terminal device, the specific service on the transmission path indicated by the first indication information.

In a second aspect, there is provided a method for selecting a path, including: determining, by a network device, a transmission path of a specific service, where the transmission path is a cellular path or a side path; and sending, by the network device, first indication information to a terminal device, where the first indication information is configured to indicate the transmission path.

In a third aspect, there is provided a terminal device, which is configured to execute the method in the foregoing first aspect or each implementation manner thereof.

Specifically, the terminal device includes a functional module for executing the method in the foregoing first aspect or each implementation manner thereof.

In a fourth aspect, there is provided a network device, which is configured to execute the method in the second aspect or each implementation manner thereof.

Specifically, the network device includes a functional module for executing the method in the foregoing second aspect or each implementation manner thereof.

In a fifth aspect, there is provided a terminal device, including: a processor and a memory. The memory is configured to store a computer program, and the processor is configured to call and run the computer program stored in the memory to execute the method in the above-mentioned first aspect or each implementation manner thereof.

In a sixth aspect, there is provided a network device, including: a processor and a memory. The memory is configured to store a computer program, and the processor is configured to call and run the computer program stored in the memory, and execute the method in the second aspect or each implementation manner thereof.

In a seventh aspect, a chip is provided for implementing any one of the foregoing first to second aspects or the method in each implementation manner thereof.

Specifically, the chip includes: a processor, configured to call and run a computer program from the memory, so that a device installed with the chip executes any one of the above-mentioned first to second aspects or any of the implementation manners thereof.

In an eighth aspect, a computer-readable storage medium is provided for storing a computer program that enables a computer to execute any one of the first aspect to the second aspect or the method in each implementation manner thereof.

In a ninth aspect, a computer program product is provided, including computer program instructions that cause a computer to execute any one of the above-mentioned first to second aspects or the methods in each implementation manner thereof.

In a tenth aspect, a computer program is provided, which, when run on a computer, causes the computer to execute any one of the above-mentioned first aspect to the second aspect or the method in each implementation manner thereof.

Through the above technical solutions, the terminal device can transmit a specific service on the path indicated by the network device, which is conducive to select a suitable path for service transmission, thereby improving communication performance.

### BRIEF DESCRIPTION OF THE DRAWINGS

Fig. 1 is a schematic diagram of a side communication system provided by an embodiment of the present application.
Fig. 2 is a schematic diagram of a side communication system provided by an embodiment of the present application.
Fig. 3 is a schematic flowchart of a method for selecting a path provided by an embodiment of the present application.
Fig. 4 is a schematic diagram of a network architecture of an application provided by an embodiment of the present application.
Fig. 5 is a schematic block diagram of a terminal device provided by an embodiment of the present application.
Fig. 6 is a schematic block diagram of a network device provided by an embodiment of the present application.
Fig. 7 is another schematic block diagram of a terminal device provided by an embodiment of the present application.
Fig. 8 is another schematic block diagram of a network device provided by an embodiment of the present application.
Fig. 9 is a schematic block diagram of a chip provided by an embodiment of the present application.
Fig. 10 is a schematic block diagram of a communication system provided by an embodiment of the present application.

### DETAILED DESCRIPTION

The technical solutions in the embodiments of the present application will be described below in conjunction with the drawings in the embodiments of the present application. Obviously, the described embodiments are part of the embodiments of the present application, not all of the embodiments. Based on the embodiments in this application, all other embodiments obtained by those of ordinary skill in the art without creative work shall fall within the protection scope of this application.

The technical solutions of the embodiments of the present application can be applied to various communication systems, such as: Global System of Mobile communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD), Universal Mobile Telecommunication System (UMTS), Worldwide Interoperability for Microwave Access (WiMAX) communication system or 5G system, etc.

Exemplarily, the communication system applied in the embodiments of the present application may include a network device, and the network device may be a device that communicates with a terminal device (or called a communication terminal or a terminal). The network device can provide communication coverage for a specific geographic area, and can communicate with the terminal device(s) located in the coverage area. Optionally, the network device can be a base station (Base Transceiver Station, BTS) in a GSM system or a CDMA system, a base station (NodeB, NB) in a WCDMA system, or an evolved base station (Evolutional Node B, eNB or eNodeB), or a wireless controller in the Cloud Radio Access Network (CRAN), or the network device can be a mobile switching center, a relay station, an access point, on-board equipment, a wearable device, a hub, a switch, a bridge, a router, a network side device in 5G networks, or a network device in the future evolution of the Public Land Mobile Network (PLMN), etc.

The communication system applied in the embodiments of the present application further includes at least one terminal device located within the coverage area of the network device. The "terminal device" as used herein includes, but is not limited to, user equipment (UE), an access terminal, a user unit, a user station, a mobile station, a mobile platform, a remote station, a remote terminal, a mobile device, a user terminal, a terminal, wireless communication equipment, a user agent or a user device. The access terminal can be a cellular phone, a cordless phone, a Session Initiation Protocol (SIP) phone, a Wireless Local Loop (WLL) station, a Personal Digital Assistant (PDA), and a handheld device with wireless communication function, a computing device or other processing devices connected to wireless modems, an in-vehicle device, a wearable device, a terminal device in the future 5G network or a terminal device in future evolution of the Public Land Mobile Network (PLMN), etc., which are not limited in the embodiments of the present disclosure.

Optionally, the 5G system or 5G network may also be referred to as a New Radio (NR) system or NR network.

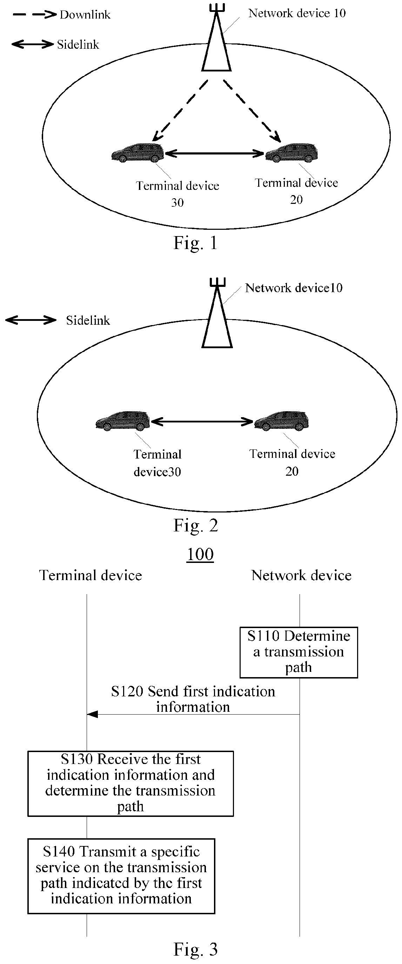

Optionally, Device to Device (D2D) communication may be performed between terminal devices. Illustratively, Fig. 1 and Fig. 2 are schematic diagrams of an application scenario of an embodiment of the present application. The figures exemplarily show one network device and two terminal devices. Optionally, the wireless communication system may include multiple network devices and the coverage of each network device may include other numbers of the terminal devices, which is not limited by the embodiments of the present application. In addition, the wireless communication system may also include other network entities such as Mobile Management Entity (MME), Serving Gateway (S-GW), Packet Data Network Gateway (P-GW), etc., which is not limited by the embodiments of the present application.

Specifically, the terminal device 20 and the terminal device 30 may communicate in a D2D communication mode. When performing D2D communication, the terminal device 20 and the terminal device 30 directly communicate through a D2D link, that is, a sidelink. As shown in Fig. 1 or Fig. 2, the terminal device 20 and the terminal device 30 directly communicate through a sidelink. In Fig. 1, the terminal device 20 and the terminal device 30 communicate through a sidelink, and the transmission resource is allocated by the network device 10. In Fig. 2, the terminal device 20 and the terminal device 30 communicate through a sidelink, and the transmission resource is independently selected by the terminal device, and the network device is not required to allocate the transmission resource.

The D2D communication mode can be applied to Vehicle to Vehicle (V2V) communication or Vehicle to Everything (V2X) communication. In V2X communication, X can generally refer to any device with wireless receiving and sending capabilities, such as but not limited to a slow-moving wireless device, a fast-moving vehicle-mounted device, or a network control node with wireless transmission and reception capabilities. It should be understood that the embodiments of the present application are mainly applied to the scenario of V2X communication, and can also be applied to any other D2D communication scenario, which is not limited in the embodiments of the present application.

Fig. 3 shows a schematic flowchart of a method 100 for selecting a path in an embodiment of the present application. The method 100 includes some or all of the following contents.

In S110, the network device determines a transmission path of a specific service, where the transmission path is a cellular path or a side path.

In S120, the network device sends first indication information to the terminal device, where the first indication information is used to indicate the transmission path.

In S130, the terminal device receives first indication information sent by the network device, where the first indication information is used to indicate the transmission path.

In S140, the terminal device transmits the specific service on the transmission path indicated by the first indication information.

In the Internet of Vehicles system, the terminal device may send services through two transmission paths, including the transmission path between the network device and the terminal device-the cellular path, and the transmission path between the terminal device and the terminal device-the side path. The cellular path uses the Uu interface, while the side path uses the PC5 interface. When the network device learns that the terminal device has a service to be transmitted, it may determine whether to use the cellular path or the side path according to the service to be transmitted. It should be noted that the so-called specific service here does not refer to a special service, but refers to a certain type of service, that is to say, services with some common features. The specific services may be classified according to service attributes, for example, source address, destination address, and so on. After the network device determines the transmission path of the service to be transmitted, the network device may further indicate to the terminal device, for example, the network device may send first indication information to the terminal device, and the indication information may display or implicitly indicate the transmission path determined by the network device. After receiving the first indication information, the terminal device may first determine whether to use the cellular path or the side path based on the first indication information, and further send the service to be transmitted on the determined transmission path.

Therefore, in the method for selecting a path provided in the embodiments of the present application, the terminal device can transmit a specific service on the path indicated by the network device, which is conducive to select a suitable path for service transmission.

Optionally, in the embodiments of the present application, the network device may be a core network device, in other words, the terminal device may receive the first indication information issued by the core network device, for example, the first indication information is carried in the Non access stratum (NAS) signaling. The core network device may be a core network device in each communication system. For example, it may be a core network mobility management entity (Mobility Management Entity, MME) in the 4G system, or an Access and Mobility Management Function (AMF) in the 5G system, or it may be a device with the same or similar function as the core network device in the existing communication system, or may also be a device with the same or similar function as the core network appearing in the future communication system.

Optionally, in the embodiments of the present application, the network device may be an access network device, or in other words, the terminal device may receive the first indication information issued by the access network device, and the first indication information is carried in the Radio Resource Control (RRC) signaling, Media Access Control (MAC), Download Control Information (DCI) and other information issued by the access network device. For example, the network device may configure the transmission path corresponding to various services to the terminal device through RRC signaling. After the terminal device determines which service is to be transmitted, it can select a path for transmission according to the configured corresponding relationship. For another example, after determining the service to be transmitted by the terminal device, the network device may select a transmission path for the service, and indicate the selected transmission path to the terminal device through DCI signaling. The access network device may be an access network device in each communication system. For example, it may be an eNB in the 4G system, or a gNB in the 5G system.

Optionally, if the network device is an access network device, the first indication information may also be carried in Service Data Adaptation Protocol (SDAP) signaling.

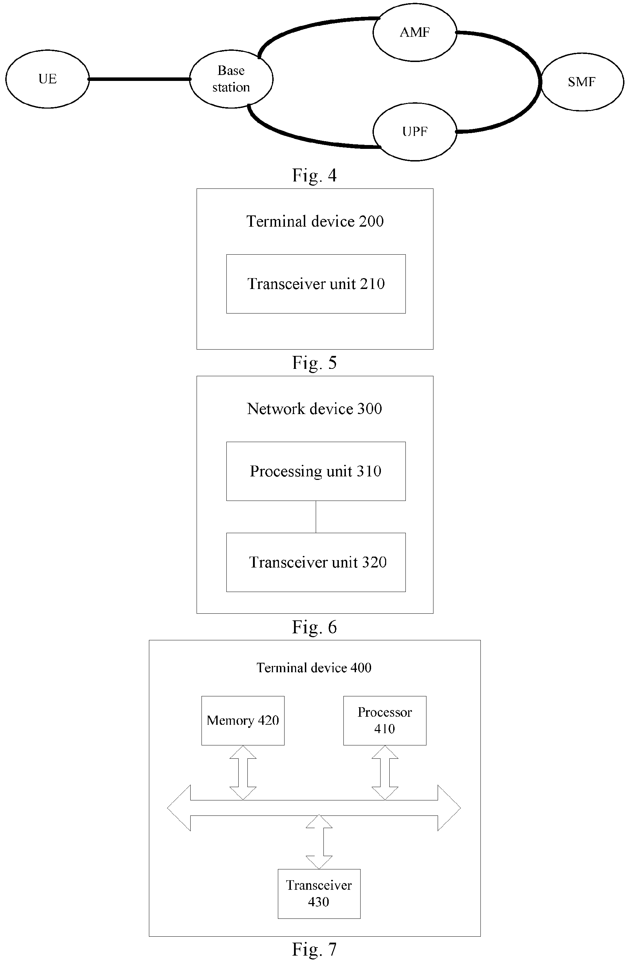

To facilitate understanding, the network architecture in 5G is firstly introduced. In the network architecture shown in Fig. 4, the base station is an access network device and is responsible for connecting the UE to the network. The base station may be, for example, the base station gNB in 5G. AMF is a network element responsible for the mobility and access management of the control plane, and a User Plane Function (UPF) is a network element responsible for the user plane. The Session Management Function (SMF) can exchange information with the AMF. For example, the SMF can obtain the information of the access network device from the AMF.

Optionally, in the embodiments of the present application, the first indication information may be directly sent by the AMF device to the UE. Optionally, the SMF may trigger the AMF to send the first indication information to the UE. For example, the SMF may send second indication information to the AMF, and the second indication information may instruct the AMF to send the first indication information to the UE. Optionally, the AMF may forward the first indication information sent by the SMF to the UE. For example, the SMF may send the first indication information to the AMF, and the AMF may forward the first indication information to the UE.

Optionally, in the embodiments of the present application, the first indication information may be directly sent by the gNB to the UE. Optionally, the AMF may trigger the gNB to send the first indication information to the UE. For example, the AMF may send the second indication information to the gNB, and the second indication information may instruct the gNB to send the first indication information to the UE. Further, the AMF may send the second indication information to the gNB under the trigger of the SMF. Optionally, the gNB may forward the first indication information sent by the AMF to the UE. For example, the AMF may send the first indication information to the gNB, and the gNB may forward the first indication information to the UE. Optionally, the first indication information may also be sent by the SMF and forwarded to the UE via the AMF and the gNB.

Optionally, in the embodiments of the present application, the first indication information may be directly sent by the gNB to the LTE. Optionally, the UPF may trigger the gNB to send the first indication information to the UE. For example, the UPF may send the second indication information to the gNB, and the second indication information may instruct the gNB to send the first indication information to the UE. Further, the UPF may send the second indication information to the gNB under the trigger of the SMF. Optionally, the gNB may forward the first indication information sent by the UPF to the UE. For example, the UPF may send the first indication information to the gNB, and the gNB may forward the first indication information to the UE. Optionally, the first indication information may also be sent by the SMF and forwarded to the UE via the UPF and the gNB.

It should be understood that the above embodiments of this application described by taking a 5G communication system as an example can also be applied to other communication systems, and can also be applied to 5G+4G dual connection scenarios, etc., which are not limited by the embodiments of this application.

In a possible embodiment, the first indication information indicates the transmission path of the service through an identifier of the service. For example, the transmission path of the specific service may be indicated through a Quality of Service flow Identity (QoS flow ID). Different services may have different QoS flow IDs, and the network device may divide the services into two categories according to QoS flow IDs, one using the cellular path and the other using the side path. The network device notifies the terminal device of this classification relationship. The network device may inform the terminal device of the QoS flow ID of the current service through the first indication information, and then the terminal device may determine which transmission path is used for service transmission according to the QoS flow ID of the current service.

In another possible embodiment, the first indication information may indicate the transmission path of the specific service through at least one of the following information of the specific service: source address, destination address, source port number, destination port number, protocol in use (such as IP protocol, etc.), Provider Service Identifier (PSID)/Intelligent Transportation Systems Application Identifier (ITS-AID), Wireless Access in Vehicular Environments (WSMP) header field, geographic network (Geonetworking) header field and Basic Transport Protocol (BTP) header field. The network device can classify services into two categories according to the above-mentioned at least one type of information, one using a cellular path, and the other using a side path, and notify the terminal device of this classification relationship. The network device can inform the terminal device of the above-mentioned at least one type of information of the current service through the first indication information, and the terminal device can determine which kind of transmission path is to be used for transmitting service according to the above-mentioned at least one type of information of the current service. The target address and the source address may be a source network protocol (Internet Protocol, IP) address and a target IP address, may also be a source address and a target address of the second layer, and may also be a Source Node in the Geonetworking header field and a Destination Node, etc.

For example, the WSMP header field includes 4 bits of reserved bits, 4 bits of version bits, and 1 to 4 bytes of PSID/ITS-AID. The first indication information may be carried in each of the above-mentioned bit fields. The first indication information may be the WSMP of the current service issued to the terminal device, and the reserved bit is used to indicate whether the cellular path is used or the side path is used. For example, one bit of the reserved bit is used, the bit of 1 indicating a cellular path, and the bit of 0 indicating a side path. Alternatively, because the PSIDs of different services are different, the network device may divide the services into two categories according to the PSIDs and informs the terminal device. The network device sends the WSMP carrying the PSID of the current service to the terminal device, and the terminal device may obtain the PSID of the current service from the WSMP header field, and determine the used transmission path according to the classification relationship.

Optionally, the network device may first map at least one of the above-mentioned information to the QoS flow ID, and the terminal device may learn the transmission path corresponding to the QoS flow ID of the current service indicated by the first indication information through the corresponding relationship between the QoS flow ID and the transmission path, and then may transmit the service on the transmission path.

Optionally, the foregoing examples illustrate various implicit indication methods, and the network device may also indicate the transmission path of the current service explicitly. That is, the network device can first determine the transmission path of the current service, and then directly indicate the determined transmission path through the indication information. For example, the determined transmission path can be indicated by a certain bit field in the RRC signaling. If the bit field is 1, it can be considered to indicate a cellular path; and if the bit field is 0, it can be considered to indicate a side path. The embodiments of the present application should not be limited to this example.

It should be understood that, in the various embodiments of the present application, the size of the sequence number of the above-mentioned processes does not mean the order of execution, and the execution order of each process should be determined by its function and internal logic. The sequence number of the above-mentioned processes should not constitute any limitation on the implementation process of the embodiments of the present application.

The method for selecting a path according to the embodiments of the present application has been described in detail above. The apparatus for selecting a path according to the embodiments of the present application will be described below in conjunction with Fig. 5 to Fig. 8. The technical features described in the method embodiments are applicable to the following apparatus embodiments.

Fig. 5 shows a schematic block diagram of a terminal device 200 according to an embodiment of the present application. As shown in Fig. 5, the terminal device 200 includes:
a transceiver unit 210, configured to receive first indication information sent by a network device, the first indication information being used to indicate a transmission path of a specific service, and the transmission path being a cellular path or a side path; and transmit the specific service on the transmission path indicated by the first indication information.

Optionally, in the embodiment of the present application, the network device is a core network device, and the first indication information is carried in non-access stratum (NAS) signaling.

Optionally, in the embodiment of the present application, the core network device is an access and mobility management function (AMF).

Optionally, in the embodiment of the present application, the network device is an access network device.

Optionally, in the embodiment of the present application, the first indication information is carried in radio resource control (RRC) signaling.

Optionally, in the embodiment of the present application, the first indication information is carried in service data adaptation protocol (SDAP) signaling.

Optionally, in the embodiment of the present application, the first indication information indicates the transmission path of the specific service through a QoS flow identifier of the specific service.

Optionally, in the embodiment of the present application, the first indication information indicates the transmission path of the specific service through at least one of the following information of the specific service: source IP address, destination IP address, source port number, destination port number, protocol in use, Provider Service Identifier (PSID)/Intelligent Transportation Systems Application Identifier (ITS-AID), destination address, source address, Wireless Access in Vehicular Environments (WSMP) header field, Geonetworking header field and Basic Transport Protocol (BTP) header field.

It should be understood that the terminal device 200 according to the embodiment of the present application may correspond to the terminal device in the method embodiment of the present application, and the above and other operations and/or functions of each unit in the terminal device 200 are to implement the corresponding process of the terminal device in the method of Fig. 3 respectively. For the sake of brevity, details will not be repeated here.

Fig. 6 shows a schematic block diagram of a network device 300 according to an embodiment of the present application. As shown in Fig. 6, the network device 300 includes:
a processing unit 310, configured to determine a transmission path of a specific service, where the transmission path is a cellular path or a lateral path; and
a transceiver unit 320, configured to send first indication information to the terminal device, where the first indication information is used to indicate the transmission path.

Optionally, in the embodiment of the present application, the network device is a core network device, and the first indication information is carried in non-access stratum (NAS) signaling.

Optionally, in the embodiment of the present application, the core network device is an access and mobility management function (AMF).

Optionally, in the embodiment of the application, the transceiver unit is further configured to: receive second indication information sent by a session management function (SMF), where the second indication information is used to instruct the AMF to send the first indication information to the terminal device.

Optionally, in the embodiment of the present application, the network device is an access network device.

Optionally, in the embodiment of the present application, the first indication information is carried in radio resource control (RRC) signaling.

Optionally, in the embodiment of the present application, the transceiver unit is further configured to: receive second indication information sent by the access and mobility management function (AMF), where the second indication information is used to indicate the access network device to send the first indication information to the terminal device.

Optionally, in the embodiment of the present application, the first indication information is carried in service data adaptation protocol (SDAP) signaling.

Optionally, in the embodiment of the present application, the transceiver unit is further configured to: receive second indication information sent by a user plane function (UPF), where the second indication information is used to instruct the access network device to send the first indication information to the terminal device.

Optionally, in the embodiment of the present application, the second instruction information is sent under an instruction of the session management function (SMF).

Optionally, in the embodiment of the present application, the first indication information indicates the transmission path of the specific service through at least one of the following information of the specific service: source IP address, destination IP address, source port number, destination port number, protocol in use, Provider Service Identifier (PSID)/Intelligent Transportation Systems Application Identifier (ITS-AID), destination address, source address, Wireless Access in Vehicular Environments (WSMP) header field, Geonetworking header field and Basic Transport Protocol (BTP) header field

Optionally, in the embodiment of the present application, the first indication information indicates the transmission path of the specific service through the quality of service flow identifier of the specific service.

Optionally, in the embodiment of the present application, the processing unit is further configured to: map at least one of the following information of the specific service to the quality of service flow identifier of the specific service: source IP address, destination IP address, source port number, destination port number, protocol in use, Provider Service Identifier (PSID)/Intelligent Transportation Systems Application Identifier (ITS-AID), destination address, source address, Wireless Access in Vehicular Environments (WSMP) header field, Geonetworking header field and Basic Transport Protocol (BTP) header field.

It should be understood that the network device 300 according to the embodiment of the present application may correspond to the network device in the method embodiment of the present application, and the above-mentioned and other operations and/or functions of each unit in the network device 300 are to implement the corresponding process of the network device in the method of Fig. 3. For the sake of brevity, details will not be repeated here.

As shown in Fig. 7, an embodiment of the present application also provides a terminal device 400. The terminal device 400 may be the terminal device 200 in Fig. 5, which can be used to execute the content of the terminal device corresponding to the method 100 in Fig. 3. The terminal device 400 shown in Fig. 7 includes a processor 410, and the processor 410 can call and run a computer program from a memory to implement the method in the embodiments of the present application.

Optionally, as shown in Fig. 7, the terminal device 400 may further include a memory 420. The processor 410 may call and run a computer program from the memory 420 to implement the method in the embodiments of the present application.

The memory 420 may be a separate device independent of the processor 410, or may be integrated in the processor 410.

Optionally, as shown in Fig. 7, the terminal device 400 may further include a transceiver 430, and the processor 410 may control the transceiver 430 to communicate with other devices. Specifically, it may send information or data to other devices, or receive information or data sent by other devices.

The transceiver 430 may include a transmitter and a receiver. The transceiver 430 may further include an antenna, and the number of antennas may be one or more.

Optionally, the terminal device 400 may be the terminal device of the embodiments of the present application, and the terminal device 400 may implement the corresponding process implemented by the terminal device in each method of the embodiments of the present application. For brevity, details are not described herein again.

In a specific implementation manner, the transceiver unit in the terminal device 300 may be implemented by the transceiver 430 in Fig. 7.

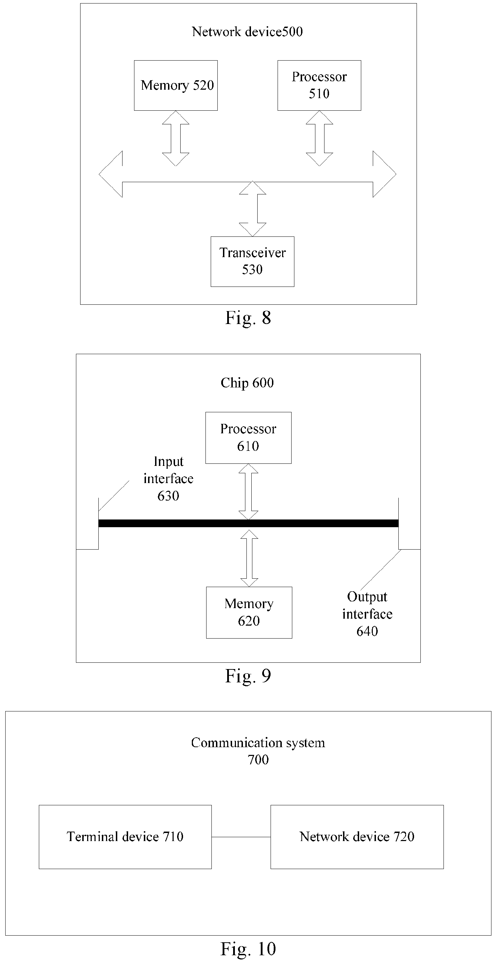

As shown in Fig. 8, an embodiment of the present application also provides a network device 500. The network device 500 may be the network device 300 in Fig. 6, which can be used to execute the content of the network device corresponding to the method 100 in Fig. 3. The network device 500 shown in Fig. 8 includes a processor 510, and the processor 510 can call and run a computer program from a memory to implement the method in the embodiments of the present application.

Optionally, as shown in Fig. 8, the network device 500 may further include a memory 520. The processor 510 may call and run a computer program from the memory 520 to implement the method in the embodiments of the present application.

The memory 520 may be a separate device independent of the processor 510, or may be integrated in the processor 510.

Optionally, as shown in Fig. 8, the network device 500 may further include a transceiver 530, and the processor 510 may control the transceiver 530 to communicate with other devices. Specifically, it may send information or data to other devices, or receive information or data sent by other devices.

The transceiver 530 may include a transmitter and a receiver. The transceiver 530 may further include an antenna, and the number of antennas may be one or more.

Optionally, the network device 500 may be the network device of the embodiments of the present application, and the network device 500 may implement the corresponding processes implemented by the network device in each method of the embodiments of the present application. For brevity, details are not described herein again.

In a specific implementation manner, the processing unit in the network device 300 may be implemented by the processor 510 in Fig. 8. The transceiver unit in the network device 300 may be implemented by the transceiver 530 in Fig. 8.

Fig. 9 is a schematic structural diagram of a chip of an embodiment of the present application. The chip 600 shown in Fig. 9 includes a processor 610, and the processor 610 can call and run a computer program from the memory to implement the method in the embodiments of the present application.

Optionally, as shown in Fig. 9, the chip 600 may further include a memory 620. The processor 610 may call and run a computer program from the memory 620 to implement the method in the embodiments of the present application.

The memory 620 may be a separate device independent of the processor 610, or may be integrated in the processor 610.

Optionally, the chip 600 may further include an input interface 630. The processor 610 can control the input interface 630 to communicate with other devices or chips, and specifically, can obtain information or data sent by other devices or chips.

Optionally, the chip 600 may further include an output interface 640. The processor 610 can control the output interface 640 to communicate with other devices or chips, and specifically, can output information or data to other devices or chips.

Optionally, the chip can be applied to the network device in the embodiments of the present application, and the chip can implement the corresponding process implemented by the network device in the various methods of the embodiments of the present application. For brevity, details are not described herein again.

Optionally, the chip can be applied to the terminal device in the embodiments of the present application, and the chip can implement the corresponding process implemented by the terminal device in the various methods of the embodiments of the present application. For brevity, details are not repeated here.

It should be understood that the chip mentioned in the embodiments of the present application may also be referred to as a system-level chip, a system chip, a chip system, or a system-on-chip, etc.

Fig. 10 is a schematic block diagram of a communication system 700 according to an embodiment of the present application. As shown in Fig. 10, the communication system 700 includes a terminal device 710 and a network device 720.

The terminal device 710 can be used to implement the corresponding function implemented by the terminal device in the above method, and the network device 720 can be used to implement the corresponding function implemented by the network device in the above method. For brevity, details will not be repeated here.

It should be understood that the processor of the embodiments of the present application may be an integrated circuit chip with signal processing capability. In the implementation process, each step of the foregoing method embodiments may be completed by an integrated logic circuit of hardware in a processor or instructions in a form of software. The processor may be a general-purpose processor, a Digital Signal Processor (DSP), an Application Specific Integrated Circuit (ASIC), a Field Programmable Gate Array (FPGA), or other programmable logic devices, discrete gates or transistor logic devices and discrete hardware components. The methods, steps, and logical block diagrams disclosed in the embodiments of the present application may be implemented or executed. The general purpose processor may be a microprocessor or the processor or any conventional processor or the like. The steps of the method disclosed in the embodiments of the present application may be directly implemented by the hardware decoding processor, or may be performed by a combination of hardware and software modules in the decoding processor. The software module may be located in a mature storage medium in the art, such as a random access memory, a flash memory, a read only memory, a programmable read only memory or an electrically erasable programmable memory, a register, and the like. The storage medium is located in the memory, and the processor reads the information in the memory and completes the steps of the above method in combination with its hardware.

It is to be understood that the memory in the embodiments of the present application may be a volatile memory or a non-volatile memory, or may include both volatile and non-volatile memories. The non-volatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM) that acts as an external cache. By way of example and not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and Direct Rambus RAM (DR RAM). It should be noted that the memories of the systems and methods described herein are intended to include, but not limited to, these and any other suitable types of memory.

It should be understood that the foregoing memory is exemplary but not restrictive. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a Direct Rambus RAM (DR RAM), etc. That is to say, the memory in the embodiments of the present application is intended to include but not limited to these and any other suitable types of memory.

The embodiment of the present application also provides a computer-readable storage medium for storing computer programs.

Optionally, the computer-readable storage medium may be applied to the network device in the embodiments of the present application, and the computer program causes the computer to execute the corresponding process implemented by the network device in each method of the embodiments of the present application. For brevity, details will not be repeated here.

Optionally, the computer-readable storage medium may be applied to the terminal device in the embodiments of the present application, and the computer program causes the computer to execute the corresponding process implemented by the mobile terminal/terminal device in each method of the embodiments of the present application. For brevity, details will not be repeated here.

The embodiments of the present application also provide a computer program product, including computer program instructions.

Optionally, the computer program product may be applied to the network device in the embodiments of the present application, and the computer program instructions cause the computer to execute the corresponding process implemented by the network device in each method of the embodiments of the present application. For brevity, details will not be repeated here.

Optionally, the computer program product may be applied to the terminal device in the embodiments of the present application, and the computer program instructions cause the computer to execute the corresponding process implemented by the mobile terminal/terminal device in each method of the embodiments of the present application. For brevity, details will not be repeated here.

The embodiment of the present application also provides a computer program.

Optionally, the computer program may be applied to the network device in the embodiments of the present application. When the computer program runs on the computer, the computer is caused to execute the corresponding process implemented by the network device in each method of the embodiments of the present application. For brevity, details will not be repeated here.

Optionally, the computer program may be applied to the terminal device in the embodiments of the present application. When the computer program runs on the computer, it causes the computer to execute the corresponding process implemented by the terminal device in each method of the embodiments of the present application. For brevity, details will not be repeated here.

Those of ordinary skill in the art will appreciate that the unit and algorithm steps of the various examples described in connection with the embodiments disclosed herein may be implemented in electronic hardware or a combination of computer software and electronic hardware. Whether these functions are performed in hardware or software depends on the specific application and design constraints of the solution. A person skilled in the art may use different methods to implement the described functions for each particular application, but such implementation should not be considered to be beyond the scope of the present application.

A person skilled in the art may clearly understand that for the convenience and brevity of the description, the specific working process of the system, the apparatus and the unit described above may refer to the corresponding process in the foregoing method embodiments, and details are not repeated herein again.

In the several embodiments provided by the present application, it should be understood that the disclosed systems, apparatuses, and methods may be implemented in other manners. For example, the apparatus embodiments described above are merely illustrative. For example, the division of the unit is only a logical function division. In actual implementation, there may be another division manner, for example, a plurality of units or components may be combined or may be integrated into another system, or some features may be ignored or not executed. In addition, the mutual coupling or direct coupling or communication connection shown or discussed may be an indirect coupling or communication connection through some interfaces, apparatuses or units, and may be in an electrical, mechanical or other form.

The units described as separate components may or may not be physically separated, and the components displayed as units may or may not be physical units, that is, may be located in one place, or may be distributed to a plurality of network units. Some or all of the units may be selected according to actual needs to achieve the purpose of the solutions of the embodiments.

In addition, each functional unit in each embodiment of the present application may be integrated into one processing unit, or each unit may exist physically separately, or two or more units may be integrated into one unit.

The functions may be stored in a computer readable storage medium if implemented in the form of a software functional unit and sold or used as a standalone product. Based on such understanding, the essence of the technical solutions of the embodiments of the present disclosure, or the part contributing to the prior art, may be embodied in the form of a software product which is stored in a storage medium including a number of instructions such that a computer device (which may be a personal computer, a server, or a network device, etc.) performs all or part of the method described in each of the embodiments of the present disclosure. The aforementioned storage media include: a U disk, a mobile hard disk, a Read-Only Memory (ROM), a Random Access Memory (RAM), a magnetic disk or an optical disk and other media that can store program codes.

The foregoing are only specific embodiments of the present application, and the protection scope of the present application is not limited thereto. The changes or substitutions readily contemplated by any person skilled in the art within the technical scope disclosed in the present application should be covered by the protection scope of this application. Therefore, the protection scope of the present application should be determined by the scope of the claims.

## Claims

1. A method for selecting a path, comprising:
receiving, by a terminal device, first indication information sent by a network device, wherein the first indication information is configured to indicate a transmission path of a specific service, and the transmission path is a cellular path or a side path; and
transmitting, by the terminal device, the specific service on the transmission path indicated by the first indication information.

2. The method according to claim 1, wherein the network device is a core network device, and the first indication information is carried in Non-Access Stratum (NAS) signaling.

3. The method according to claim 2, wherein the core network device is an Access and Mobility Management Function (AMF).

4. The method according to claim 1, wherein the network device is an access network device.

5. The method according to claim 4, wherein the first indication information is carried in Radio Resource Control (RRC) signaling.

6. The method according to claim 4, wherein the first indication information is carried in Service Data Adaptation Protocol (SDAP) signaling.

7. The method according to any one of claims 1 to 5, wherein the first indication information indicates the transmission path of the specific service through a quality of service flow identity of the specific service.

8. The method according to any one of claims 1 to 5, wherein the first indication information indicates the transmission path of the specific service through at least one of following information of the specific service: a source address, a destination address, a source port number, a destination port number, a protocol in use, a Provider Service Identifier (PSID)/Intelligent Transportation Systems Application Identifier (ITS-AID), a Wireless Access in Vehicular Environments (WSMP) header field, a geonetworking header field, and a Basic Transport Protocol (BTP) header field.

9. A method for selecting a path, comprising:
determining, by a network device, a transmission path of a specific service, wherein the transmission path is a cellular path or a side path; and
sending, by the network device, first indication information to a terminal device, wherein the first indication information is configured to indicate the transmission path.

10. The method according to claim 9, wherein the network device is a core network device, and the first indication information is carried in Non-Access Stratum (NAS) signaling.

11. The method according to claim 10, wherein the core network device is an Access and Mobility Management Function (AMF).

12. The method according to claim 11, further comprising:
receiving, by the AMF, second indication information sent by a Session Management Function (SMF), wherein the second indication information is configured to instruct the AMF to send the first indication information to the terminal device.

13. The method according to claim 9, wherein the network device is an access network device.

14. The method according to claim 13, wherein the first indication information is carried in Radio Resource Control (RRC) signaling.

15. The method according to claim 14, further comprising:
receiving, by the access network device, second indication information sent by an Access and Mobility Management Function (AMF), wherein the second indication information is configured to instruct the access network device to send the first indication information to the terminal device.

16. The method according to claim 13, wherein the first indication information is carried in Service Data Adaptation Protocol (SDAP) signaling.

17. The method according to claim 16, further comprising:
receiving, by the access network device, second indication information sent by a User Plane Function (UPF), wherein the second indication information is configured to instruct the access network device to send the first indication information to the terminal device.

18. The method according to claim 15 or 17, wherein the second indication information is sent under an instruction of a Session Management Function (SMF).

19. The method according to any one of claims 9 to 18, wherein the first indication information indicates the transmission path of the specific service through at least one of following information of the specific service: a source address, a destination address, a source port number, a destination port number, a protocol in use, a Provider Service Identifier (PSID)/Intelligent Transportation Systems Application Identifier (ITS-AID), a Wireless Access in Vehicular Environments (WSMP) header field, a geonetworking header field, and a Basic Transport Protocol (BTP) header field.

20. The method according to any one of claims 9 to 18, wherein the first indication information indicates the transmission path of the specific service through a quality of service flow identity of the specific service.

21. The method according to claim 20, wherein before the network device sends the first indication information to the terminal device, the method further comprises:
mapping, by the network device, at least one of following information of the specific service to the quality of service flow identity of the specific service: a source address, a destination address, a source port number, a destination port number, a protocol in use, a Provider Service Identifier (PSID)/Intelligent Transportation Systems Application Identifier (ITS-AID), a Wireless Access in Vehicular Environments (WSMP) header field, a geonetworking header field, and a Basic Transport Protocol (BTP) header field.

22. A terminal device, comprising:
a transceiver unit, configured to receive first indication information sent by a network device, the first indication information being configured to indicate a transmission path of a specific service, and the transmission path being a cellular path or a side path; and transmit the specific service on the transmission path indicated by the first indication information.

23. The terminal device according to claim 22, wherein the network device is a core network device, and the first indication information is carried in Non-Access Stratum (NAS) signaling.

24. The terminal device according to claim 23, wherein the core network device is an Access and Mobility Management Function (AMF).

25. The terminal device according to claim 22, wherein the network device is an access network device.

26. The terminal device according to claim 25, wherein the first indication information is carried in Radio Resource Control (RRC) signaling.

27. The terminal device according to claim 25, wherein the first indication information is carried in a Service Data Adaptation Protocol (SDAP) signaling.

28. The terminal device according to any one of claims 22 to 27, wherein the first indication information indicates the transmission path of the specific service through a quality of service flow identity of the specific service.

29. The terminal device according to any one of claims 22 to 27, wherein the first indication information indicates the transmission path of the specific service through at least one of following information of the specific service: a source address, a destination address, a source port number, a destination port number, a protocol in use, a Provider Service Identifier (PSID)/Intelligent Transportation Systems Application Identifier (ITS-AID), a Wireless Access in Vehicular Environments (WSMP) header field, a geonetworking header field, and a Basic Transport Protocol (BTP) header field.

30. A network device, comprising:
a processing unit, configured to determine a transmission path of a specific service, wherein the transmission path is a cellular path or a side path; and
a transceiver unit, configured to send first indication information to a terminal device, wherein the first indication information is configured to indicate the transmission path.

31. The network device according to claim 30, wherein the network device is a core network device, and the first indication information is carried in Non-Access Stratum (NAS) signaling.

32. The network device according to claim 31, wherein the core network device is an Access and Mobility Management Function (AMF).

33. The network device according to claim 32, wherein the transceiver unit is further configured to:
receive second indication information sent by a Session Management Function (SMF), wherein the second indication information is configured to instruct the AMF to send the first indication information to the terminal device.

34. The network device according to claim 30, wherein the network device is an access network device.

35. The network device according to claim 34, wherein the first indication information is carried in Radio Resource Control (RRC) signaling.

36. The network device according to claim 35, wherein the transceiver unit is further configured to:
receive second indication information sent by an Access and Mobility Management Function (AMF), wherein the second indication information is configured to instruct the access network device to send the first indication information to the terminal device.

37. The network device according to claim 34, wherein the first indication information is carried in Service Data Adaptation Protocol (SDAP) signaling.

38. The network device according to claim 37, wherein the transceiver unit is further configured to:
receive second indication information sent by a User Plane Function (UPF), wherein the second indication information is configured to instruct the access network device to send the first indication information to the terminal device.

39. The network device according to claim 36 or 38, wherein the second instruction information is sent under an instruction of a Session Management Function (SMF).

40. The network device according to any one of claims 30 to 39, wherein the first indication information indicates the transmission path of the specific service through at least one of following information of the specific service: a source address, a destination address, a source port number, a destination port number, a protocol in use, a Provider Service Identifier (PSID)/Intelligent Transportation Systems Application Identifier (ITS-AID), a Wireless Access in Vehicular Environments (WSMP) header field, a geonetworking header field, and a Basic Transport Protocol (BTP) header field.

41. The network device according to any one of claims 30 to 39, wherein the first indication information indicates the transmission path of the specific service through a quality of service flow identity of the specific service.

42. The network device according to claim 41, wherein the processing unit is further configured to:
map at least one of following information of the specific service to the quality of service data stream identifier of the specific service: a source address, a destination address, a source port number, a destination port number, a protocol in use, a Provider Service Identifier (PSID)/Intelligent Transportation Systems Application Identifier (ITS-AID), a Wireless Access in Vehicular Environments (WSMP) header field, a geonetworking header field, and a Basic Transport Protocol (BTP) header field.

43. A terminal device, comprising: a processor and a memory, the memory is configured to store a computer program, and the processor is configured to call and run the computer program stored in the memory, and execute the method according to any one of claims 1 to 8.

44. A network device, comprising: a processor and a memory, the memory is configured to store a computer program, and the processor is configured to call and run the computer program stored in the memory, and execute the method according to claims 9 to 21.

45. A chip, comprising: a processor, configured to call and run a computer program from a memory, so that a device installed with the chip executes the method according to any one of claims 1 to 8.

46. A chip, comprising: a processor, configured to call and run a computer program from a memory, so that a device installed with the chip executes the method according to any one of claims 9 to 21.

47. A computer-readable storage medium, configured to store a computer program that enables a computer to execute the method according to any one of claims 1 to 8.

48. A computer-readable storage medium, configured to store a computer program that enables a computer to execute the method according to any one of claims 9 to 21.

49. A computer program product, comprising computer program instructions that cause a computer to execute the method according to any one of claims 1 to 8.

50. A computer program product, comprising computer program instructions that cause a computer to execute the method according to any one of claims 9 to 21.

51. A computer program, wherein the computer program causes a computer to execute the method according to any one of claims 1 to 8.

52. A computer program, wherein the computer program causes a computer to execute the method according to any one of claims 9 to 21.
